(19) Europäisches Patentamt
European Patent Office
Office européen des brevets

(11) **EP 1 543 647 B1**

(12) **EUROPÄISCHE PATENTSCHRIFT**

(45) Veröffentlichungstag und Bekanntmachung des Hinweises auf die Patenterteilung:
**29.10.2008 Patentblatt 2008/44**

(21) Anmeldenummer: **03750294.5**

(22) Anmeldetag: **28.08.2003**

(51) Int Cl.:
**H04L 7/02** *(2006.01)*

(86) Internationale Anmeldenummer:
**PCT/DE2003/002865**

(87) Internationale Veröffentlichungsnummer:
**WO 2004/030268 (08.04.2004 Gazette 2004/15)**

(54) **VORRICHTUNG UND VERFAHREN ZUR ERKENNUNG EINES NUTZSIGNALS DURCH DETEKTION EINES IN DEM NUTZSIGNAL ENTHALTENEN PERIODISCHEN SIGNALS**

DEVICE AND METHOD FOR IDENTIFYING A USEFUL SIGNAL BY DETECTING A PERIODIC SIGNAL CONTAINED IN THE USEFUL SIGNAL

DISPOSITIF ET PROCEDE POUR IDENTIFIER UN SIGNAL UTILE POUR DETECTER UN SIGNAL PERIODIQUE CONTENU DANS LE SIGNAL UTILE

(84) Benannte Vertragsstaaten:
**DE FR GB IT**

(30) Priorität: **26.09.2002 DE 10245047**

(43) Veröffentlichungstag der Anmeldung:
**22.06.2005 Patentblatt 2005/25**

(73) Patentinhaber: **Infineon Technologies AG**
**81669 München (DE)**

(72) Erfinder: **MARSILI, Stefano**
**A-9586 Fürnitz (AT)**

(74) Vertreter: **Patentanwälte Lambsdorff & Lange**
**Dingolfinger Strasse 6**
**81673 München (DE)**

(56) Entgegenhaltungen:
**GB-A- 2 016 246**          **RU-C- 2 055 395**

**Beschreibung**

Die Erfindung betrifft eine Vorrichtung und ein Verfahren zur Erkennung eines Nutzsignals durch Detektion eines in dem Nutzsignal enthaltenen periodischen Signals.

In drahtlosen lokalen Netzwerken werden mittlerweile Datenübertragungsraten von bis zu 54 MBit pro Sekunde erreicht. Die Spezifikationen hierzu finden sich in "IEEE 802.11a - Part 11: Wireless LAN Medium Access Control (MAC) and Physical Layer (PHY) specifications: High-speed Physical Layer in the 5 GHZ Band" sowie "IEEE 802.11g - Part 11: Wireless LAN Medium Access Control (MAC) and Physical Layer (PHY) specifications: Further Higher Speed Physical Layer Extension in the 2,4 GHz Band" oder auch in "ETSI TS 101 761-1 Broadband Radio Access Networks (BRAN); Hiperlan Type 2; Physical (PHY) Layer". Zur Detektion eines Nutzsignals wird nach einem periodischen Signal gesucht, welches am Anfang eines Datenbursts des Nutzsignals ausgesendet wird.

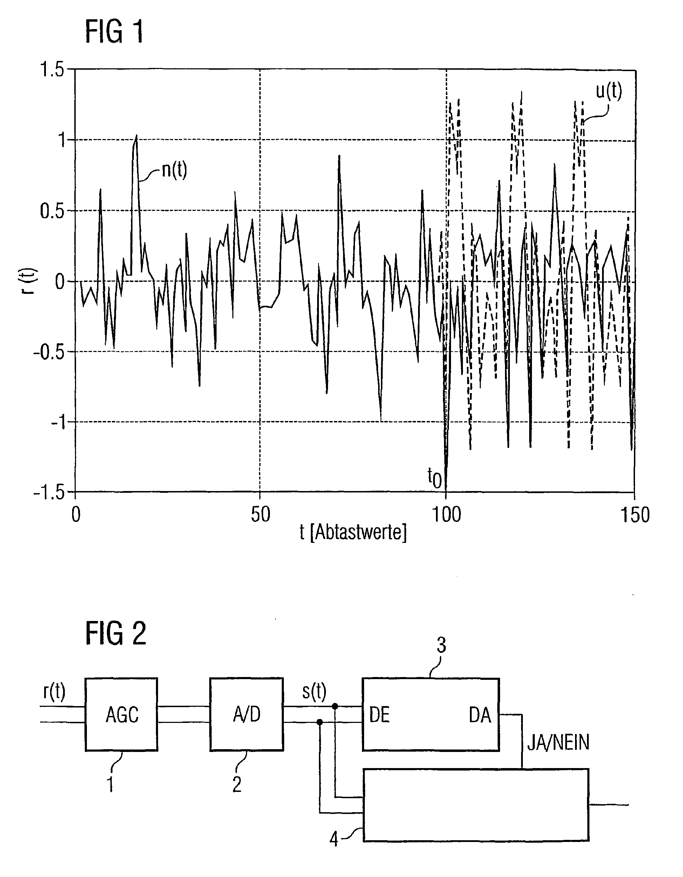

In Figur 1 ist ein Zeitdiagramm gezeigt, bei dem ab einem bestimmten Zeitpunkt $t_0$ zusätzlich zu einem Rausch-signal n(t) ein periodisches Signal u(t) mit definierter Periode auftritt. Auf der x-Achse des Diagramms ist dabei die Zeit in Einheiten einer Abtastzeitdauer, d.h. der Abtastindex, und auf der y-Achse die Amplitude des Gesamtsignals r(t) bestehend aus dem Rauschsignal n(t) und dem periodischen Signal u(t) aufgetragen. Mittels eines Signaldetektors ist das Auftreten des dem Rauschsignal n(t) überlagerten periodischen Signals u(t) zu detektieren. Wenn der Signaldetektor fehlerfrei arbeitet, muss er bis zum Zeitpunkt $t_0$ feststellen, dass kein periodisches Signal u(t) vorhanden ist. Die Wahrscheinlichkeit einer fehlerhaften Detektion des periodischen Signals muss in diesem Zeitraum möglichst gering sein. Nachdem das periodische Signal u(t) zum Zeitpunkt $t_0$ aufgetreten ist, muss der Signaldetektor andererseits so schnell wie möglich das Vorhandensein des periodischen Signals u(t) nachweisen. Die Fehlerrate soll dabei ebenfalls so gering wie möglich sein. Das periodische Signal u(t) und damit das Nutzsignal soll beispielsweise innerhalb von 4 $\mu$s mit einer Wahrscheinlichkeit von 90 % nachgewiesen werden.

Eine mögliche Verwendung eines solchen Signaldetektors ist in Figur 2 gezeigt. Das analoge komplexe Signal r(t), welches das Rauschsignal n(t) enthält und das periodische Signal u(t) enthalten kann, wird mittels eines Verstärkers mit automatischer Verstärkungsanpassung 1 skaliert und einem Analog-Digital-Wandler 2 zugeführt. Das am Ausgang des Analog-Digital-Wandlers 2 abgreifbare digitale komplexe Signal s(t) wird dem Signaldetektor 3 zugeführt. Zudem wird das Signal s(t) einem Empfänger 4 zugeführt. Der Signaldetektor 3 teilt dem Empfänger 4 über ein am Detektorausgang DA anliegendes Signal mit, ob ein periodisches Signal detektiert wurde.

Weil der Verstärker mit automatischer Verstärkungsanpassung 1, im folgenden auch Automatic Gain Control (AGC) genannt, die Gesamtleistung verändert, genügt es für die Detektion des periodischen Signals u(t) nicht, nur die Leistungsveränderung des Signals s(t) zu überwachen. Der Verstärker mit automatischer Verstärkungsanpassung 1 passt die Signalverstärkung von Zeit zu Zeit den Bedürfnissen an. Daher schwankt die Leistung am Eingang des Analog-Digital-Wandlers 2 und damit auch am Eingang DE des Signaldetektors 3, weshalb die Veränderung der Leistung im Eingangssignal s(t) keine verlässliche Aussage über das Vorhandensein oder die Abwesenheit des periodischen Signals u(t) zulässt.

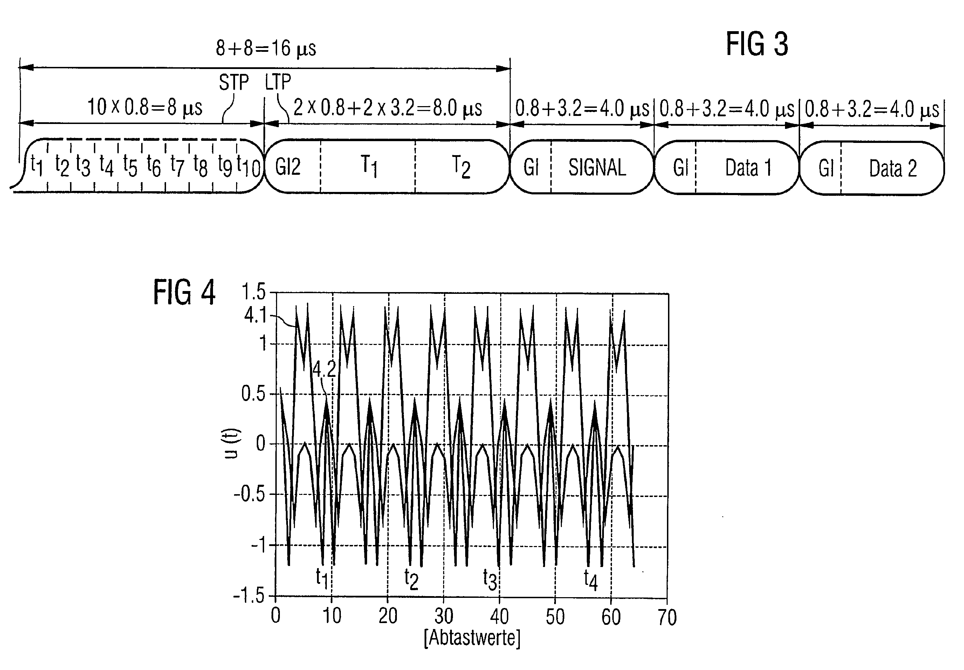

In Figur 3 ist die Burststruktur gezeigt, wie sie in der oben genannten IEEE-Spezifikation definiert ist und zur Datenübertragung sowie zur Synchronisation zwischen Sender und Empfänger dient. Die Burststruktur beginnt mit einer aus kurzen Trainingssequenzen aufgebauten Präambel STP, welche auch als PLCP-Präambel oder OFDM training structure bezeichnet wird. Ein 0,8 $\mu$s langes Signal (kurze Trainingssequenz), in Figur 3 mit $t_1$ bezeichnet, wird innerhalb STP 10 mal für insgesamt 8 $\mu$s wiederholt. In Figur 3 sind die Wiederholungen mit $t_2$, $t_3$, ..., $t_{10}$ gekennzeichnet. Daran schließen sich eine aus einer Schutzzeit GI2 und zwei langen Trainingssequenzen T1 und T2 aufgebaute Präambel LTP an. LTP erstreckt sich ebenfalls über 8 $\mu$s. Da es auf LTP und die LTP nachfolgenden Burst-Abschnitte SIGNAL, Data1, Data2 nicht ankommt, wird im Folgenden darauf auch nicht weiter eingegangen. Erläuterungen hierzu finden sich im Abschnitt 17.3 der oben genannten Spezifikation IEEE 802.11a.

Zur empfängerseitigen Erkennung eines Bursts wird das periodische Signal $t_1$, $t_2$, ..., $t_{10}$ der Präambel STP verwendet. Um das periodische Signal im Signal s(t) zu detektieren, kann man die Ähnlichkeit des periodischen Signals $t_1$, $t_2$, ..., $t_{10}$ mit sich selbst bei einer Verschiebung entsprechend der Signalperiode ausnutzen. Für den Fall, dass kein periodisches Signal vorliegt, sollte das Signal s(t) auch keine Periodizität aufweisen.

In der zweiten oben erwähnten Spezifikationen ETSI wird die kurze Trainingssequenz etwas anders definiert, die Periodizität des periodischen Signals ist hier jedoch ebenfalls gegeben. Es sei hier auf die Spezifikationsabschnitte 5.7 und 5.8 verwiesen. Daher kann die Detektion des periodischen Signals u(t), welches dem Rauschsignal n(t) überlagert ist, auch bei dieser Spezifikation auf die gleiche Art und Weise erfolgen.

In Figur 4 ist in Form eines Zeitdiagramms, bei dem auf der x-Achse der Abtastwerte-Index und auf der y-Achse die Amplitude in beliebigen Einheiten aufgetragen sind, der Realteil 4.1 und der Imaginärteil 4.2 von insgesamt 4 Signalen $t_1$ bis $t_4$ dargestellt. Die Abtastrate beträgt 20 MHz, d.h. 16 Abtastwerte entsprechen einer Wiederholungs-zeitdauer (0,8 $\mu$s) des periodischen Signals u(t). Mittels des Signaldetektors 3 sollten die in Figur 4 gezeigten Signale $t_1$ bis $t_4$ des periodischen Signals detektierbar sein.

Aus dem Stand der Technik "VLSI Implementation of IEEE 802.11a Physical Layer, L. Schwoerer, H. Wirz, Nokia Research Center, 6th International OFDM Workshop 2001 - Hamburg, Seiten 28-1 bis 28-4" ist ein Signaldetektor bekannt, der zur Detektion des periodischen Signals folgende Autokorrelationsfunktion verwendet:

$$c_1(t) = \left| \sum_{t_i}^{t_1+T} s(t)s^*(t - \tau) \right| \qquad (1)$$

Dabei ist $\tau$ eine Periode des periodischen Signals u(t) und T die Integrations- bzw. Summationszeitdauer. Die Periode $\tau$ kann die Wiederholungszeitdauer (0,8 $\mu$s) oder ein Vielfaches davon sein, d.h. $\tau = 0,8$ $\mu$s oder 1,6 $\mu$s oder 2,4 $\mu$s, ...

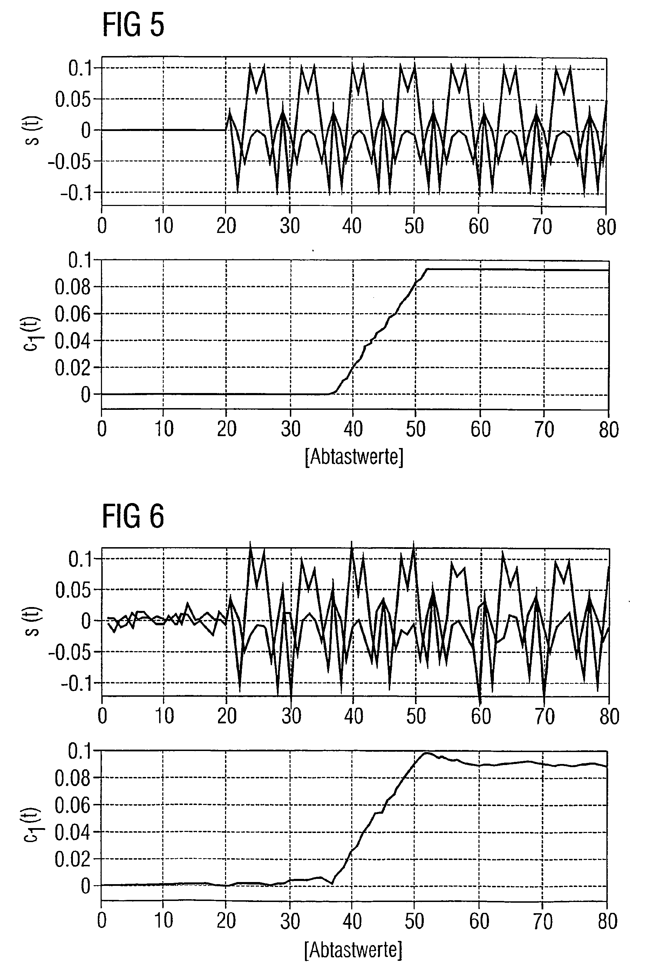

In Figur 5 sind zwei Zeitdiagramme dargestellt, bei denen jeweils auf der x-Achse der Abtastwerte-Index und auf der y-Achse die Amplitude aufgetragen sind. Im oberen Diagramm ist das digitale komplexe Signal s(t) dargestellt. Beim Abtastwerte-Index 20 tritt das periodische Signal auf. Im unteren Diagramm ist die Autokorrelationsfunktion $c_1(t)$, wie sie oben in Gleichung' (1) angegeben ist, gezeigt. Dabei beinhaltet das Signal s(t) kein Rauschsignal. Die Integrations- bzw. Summationszeitdauer T beträgt 0,8 $\mu$s. Nach 1,6 $\mu$s (entspricht 32 Abtastungen) korrelieren die letzten 0,8 $\mu$s des Signals s(t) mit den ersten 0,8 $\mu$s des Signals s(t) perfekt und die Autokorrelationssumme bleibt 1,6 $\mu$s nach dem Auftreten des periodischen Signals konstant.

In Figur 6 sind ebenfalls zwei Zeitdiagramme gezeigt, wobei das obere Zeitdiagramm wiederum das Signal s(t) und das untere Zeitdiagramm die Autokorrelationsfunktion $c_1(t)$ zeigt. Die Abtastrate beträgt wiederum 20 MHz. Hierbei weist das Signal s(t) nun jedoch einen Rauschsignalanteil auf. Der Autokorrelationswert $c_1(t)$ ist nunmehr nicht mehr stabil. Zudem weicht der Autokorrelationswert $c_1(t)$ auch bereits vor dem Auftreten des periodischen Signals vom Wert 0 ab. Um das periodische Signal sicher zu detektieren, ist daher ein Schwellenwert zu berücksichtigen. Überschreitet der Autokorrelationswert $c_1(t)$ den Schwellenwert, wird angenommen, dass das periodische Signal vorliegt. Je höher der Schwellenwert ist, desto kleiner ist die Wahrscheinlichkeit, dass die Autokorrelation gemäß der oben genannten Funktion $c_1(t)$ fälschlicherweise ein periodisches Signal detektiert. Dies hat jedoch zur Folge, dass es um so länger dauert, bis das periodische Signal detektiert ist, je höher der Schwellenwert ist.

Der Wert der Autokorrelation $c_1(t)$ hängt zudem von der Leistung des Signals s(t) ab. Der Schwellenwert muss daher der Signalleistung angepasst werden. Der Mittelwert der Leistung des Signals s(t) ist nicht konstant, weil der Verstärker mit veränderlicher Verstärkung 1, welcher vor dem Signaldetektor 3 angeordnet ist, versucht, das Ausgangssignal innerhalb eines Intervalls zu halten. Dies ist erforderlich, um eine Übersteuerung des Analog-Digital-Wandlers 2 zu vermeiden. Auch wenn das Eingangssignal r(t), wie in Figur 2 gezeigt, eine konstante mittlere Leistung aufweist, ist es nicht möglich, den Verstärker mit anpassbarer Verstärkung 1 sofort auf den richtigen Wert einzustellen. Dazu sind erst eine Reihe von Einstellungen erforderlich. Infolge der Veränderung der Verstärkung treten also in jedem Fall Schwankungen in der mittleren Leistung des Signals s(t) am Eingang des Signaldetektors 3 auf. Hinzu kommt, dass der Verstärker mit anpassbarer Verstärkung 1 normalerweise erst dann auf einen festen Endwert eingestellt wird, wenn das periodische Signal detektiert wurde und das Nutzsignal empfangen wird. Daher muss die Leistung während des Detektionsprozesses geschätzt werden. Im Stand der Technik wird zur Schätzung der Leistung des Signals s(t) die folgende Formel verwendet:

$$p(t) = \left| \sum_{t_i}^{t_i+T} s(t)s^*(t) \right| \qquad (2)$$

Die Leistung p(t) wird über die letzten T Sekunden des bei der Autokorrelation verwendeten Signals s(t) geschätzt. Dabei ist zu beachten, dass das verzögerte Signal s(t-$\tau$) der Autokorrelation bezüglich seiner Leistung nicht vollständig erfasst wird, siehe Gleichung (2). Daher kann eine Veränderung der Verstärkung durch den Verstärker 1 nicht sofort vollständig durch die Einstellung des Schwellenwertes erfasst werden.

Eine diesbezüglich bessere Lösung wäre es, die Leistung beider Signalanteile (des Signals s(t) und des ver- zögerten Signals s(t-$\tau$)) zu schätzen, miteinander zu multiplizieren und dann aus dem Produkt die Wurzel zu ziehen. Dies würde jedoch in nachteiliger Weise einen deutlich höheren Implementierungsaufwand verursachen.

Die Entscheidung, ob das periodische Signal vorliegt oder nicht vorliegt, wird mittels der Bedingung

$$c_1(t) \geq p(t)*thr \qquad\qquad\qquad (3)$$

getroffen. Dabei bezeichnet thr den (nicht Leistungsskalierten) Schwellenwert für die Autokorrelation. Falls $c_1(t)$ größer oder gleich dem Produkt aus der Leistung p(t) und dem Schwellenwert thr ist, wird angenommen, dass ein periodisches Signal vorliegt.

Die Höhe des Schwellenwerts thr ist dabei das Ergebnis einer Abwägung zwischen der gewünschten hohen Detektionssicherheit des periodischen Signals und einer andererseits möglichst schnellen Detektion des periodischen Signals.

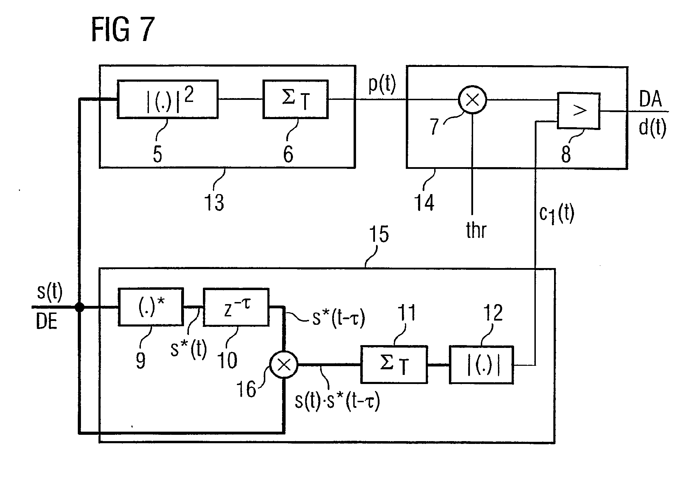

Das Blockdiagramm in Figur 7 zeigt den Aufbau eines Signaldetektors 3, welcher die im oben genannten Stand der Technik angegebenen Gleichungen umsetzt. Die dicken Linien kennzeichnen komplexe Signale, während die dünnen Linien reelle Signale kennzeichnen.

Der Signaldetektor 3, wie er in Figur 7 als Blockschaltbild gezeigt ist, weist einen Eingang DE auf, an dem das Eingangssignal s(t), welches das digitale komplexe Ausgangssignal des Analog-Digital-Wandlers 2 ist, anliegt. Das Eingangssignal s(t) wird einer Einheit zur Leistungsschätzung 13 zugeführt, die an ihrem Ausgang das Leistungsschätzsignal p(t), welches nach Gleichung (2) berechnet wurde, zur Verfügung stellt. Hierzu weist die Einheit zur Leistungsschätzung 13 eine Einheit zur Betragsquadratbildung 5 und einen Summierer 6 auf. Gleichzeitig wird das Signal s(t) einer Autokorrelationseinheit 15 zugeführt. Die Autokorrelationseinheit 15 umfast eine Einheit 9 zur Bildung des konjugiert komplexen Signals, eine Verzögerungseinheit 10 zur Verzögerung des Signals s(t) um die Periode $\tau$, sowie einen Multiplizierer 16, welcher das Signal s(t) mit dem verzögerten, komplex konjugierten Signal s*(t-$\tau$) multipliziert. Hinter dem Multiplizierer 16 sind ein Summierer 11 mit der Summierzeitdauer T und eine Einheit zur Betragsbildung 12 angeordnet. Der Ausgang der Autokorrelationseinheit 15 ist mit einem ersten Eingang einer Entscheidungseinheit 14 verbunden. An einem zweiten Eingang der Entscheidungseinheit 14 liegt der Schwellenwert thr an. Ein dritter Eingang der Entscheidungseinheit 14 ist mit dem Ausgang der Einheit zur Leistungsschätzung 13 verbunden. Die Skalierung des Schwellenwertes thr erfolgt mittels des Multiplizierers 7. Die Überprüfung der Schwellenwertbedingung gemäß Gleichung (3) wird durch den Vergleicher 8 vorgenommen. Am Ausgang DA des Signaldetektors 3 ist ein Detektorsignal d(t) abgreifbar, welches angibt, ob ein periodisches Signal detektiert wurde.

Eine Aufgabe der Erfindung ist es, eine Vorrichtung und ein Verfahren zur Detektion eines periodischen Signals anzugeben, die bzw. das sowohl sicher als auch schnell mit möglichst geringem Implementierungsaufwand ein periodisches Signal detektiert. Insbesondere sollen sich dabei Änderungen in der Stärke des Eingangssignals kaum auf die Detektionssicherheit auswirken.

Die Aufgabe wird durch eine Vorrichtung zur Detektion eines periodischen Signals mit den im Anspruch 1 angegebenen Merkmalen und durch ein Verfahren zur Detektion eines periodischen Signals mit den im Anspruch 8 angegebenen Merkmalen gelöst.

Die erfindungsgemäße Vorrichtung zur Erkennung eines Nutzsignals durch Detektion eines in dem Nutzsignal enthaltenen periodischen Signals weist eine Korrelationseinheit zur Korrelation eines Signals, welches das periodisches Signal enthalten kann, mit dem Vorzeichen des Signals unter Berücksichtigung einer Zeitverzögerung zwischen dem Signal und dem Vorzeichen des Signals auf. Zudem umfasst sie eine Amplitudenschätzeinheit zur Schätzung der Amplitude des Signals. Schließlich ist noch eine Entscheidungseinheit zum Entscheiden über das Vorhandensein des periodischen Signals durch Vergleich vorgesehen, die der Amplitudenschätzeinheit und der Korrelationseinheit nachgeschaltet ist.

Das erfindungsgemäße Verfahren zur Erkennung eines Nutzsignals durch Detektion eines in dem Nutzsignal enthaltenen periodischen Signals weist folgende Schritte auf. Ein Signal, in welchem das periodische Signal vorhanden sein kann, wird unter Berücksichtigung einer Zeitverzögerung mit dem Vorzeichen des Signals korreliert. Die Amplitude des Signals wird geschätzt. Anhand der Amplitude und des bei der Korrelation erhaltenen Signals wird durch Vergleich entschieden, ob das periodische Signal vorhanden ist.

Vorteilhafte weiterbildungen der Erfindung ergeben sich aus den in den abhängigen Ansprüchen angegebenen Merkmalen.

Bei der erfindungsgemäßen Vorrichtung kann die Korrelationseinheit eine Einheit zur Bestimmung des Vorzeichens und zur Verzögerung des Signals aufweisen. Ferner umfasst sie vorzugsweise einen Multiplizierer, dessen erster Eingang der Einheit zur Bestimmung des Vorzeichens und zur Verzögerung des Signals nachgeschaltet ist, und dessen zweiter Eingang das Signal entgegennimmt. Dem Multiplizierer ist eine erste Summiereinheit nachgeschaltet.

In einer Weiterbildung der Erfindung weist die Amplitudenschätzeinheit eine Einheit zur Bildung des Betrags des Realteils und des Betrags des Imaginärteils des Signals sowie eine nachgeschaltete zweite Summiereinheit auf.

In einer Ausführungsform der Erfindung weist die Entscheidungseinheit einen Multiplizierer zum Multiplizieren eines von der Amplitudenschätzeinheit ausgegebenen Signals mit einem vorbestimmten Wert und einen Vergleicher zum Vergleichen des von der Korrelationseinheit ausgegebenen Signals mit dem von dem Multiplizierer ausgegebenen Signal auf.

Bei einer zusätzlichen Weiterbildung der Erfindung ist eine Einheit zur Betragsbildung vorgesehen, welche der ersten Summiereinheit nachgeschaltet ist.

In einer weiteren Ausführungsform der Erfindung weist die Einheit zur Betragsbildung zum Zwecke der Schätzung des Betrags eine zweite Entscheidungseinheit auf, welche derart ausgebildet ist, dass sie anhand einer abschnittsweise definierten Schätzfunktion den Betrag des von der ersten Summiereinheit gelieferten Signals schätzt.

Bei der erfindungsgemäßen Vorrichtung kann auch eine Einheit zur Signalzerlegung vorgesehen sein, welche der zweiten Entscheidungseinheit vorgeschaltet ist.

Bei dem erfindungsgemäßen Verfahren können das Signal und dessen Vorzeichen korreliert werden, indem das Signal und das zeitverzögerte, gegebenenfalls konjungiert komplexe Vorzeichen des Signals miteinander multipliziert werden und ein sich daraus ergebendes Signal aufsummiert wird.

In einer bevorzugten Ausführungsform des Verfahrens wird, um zu entscheiden, ob das periodische Signal vorliegt, die Amplitude mit einem vorbestimmten Wert multipliziert und anschließend mit dem Betrag verglichen.

Die erfindungsgemäße Vorrichtung und das Verfahren können in einem drahtlosen lokalen Netzwerk, insbesondere gemäß dem Standard IEEE 802.11a oder dem Standard ETSI TS 101 761-1 (BRAN), Hiperlan Typ2, verwendet werden.

Nachfolgend wird die Erfindung anhand eines Ausführungsbeispiels unter Bezugnahme auf die Zeichnung beschrieben; in dieser zeigt:

Fig. 1    ein Zeitdiagramm eines auszuwertenden Rauschsignals, dem ein periodisches Signal überlagert ist;

Fig. 2    ein Blockschaltbild einer Anwendungsmöglichkeit eines Signaldetektors zur Detektion des periodischen Signals;

Fig. 3    eine Burststruktur, wie sie in der IEEE-Spezifikation beschrieben ist;

Fig. 4    ein Zeitdiagramm des Signals bei der Aussendung der Trainingssequenz-Präambel aus Figur 3;

Fig. 5    den Signalverlauf eines am Eingang des Signaldetektors anliegenden Signals und den dazugehörigen Verlauf der Autokorrelationsfunktion;

Fig. 6    den Signalverlauf eines einen Rauschanteil aufweisenden am Eingang des Signaldetektors anliegenden Signals und den dazugehörigen Verlauf der Autokorrelationsfunktion;

Fig. 7    ein Blockschaltbild des Aufbaus eines Signaldetektors in Analogie zum Stand der Technik;

Fig. 8    ein Blockschaltbild des Aufbaus eines erfindungsgemäßen Signaldetektors; und

Fig. 9    den Aufbau einer Einheit zur Betragsbildung, wie sie bei der in Figur 8 gezeigten Ausführungsform zum Einsatz kommt.

Auf die Beschreibung der Figuren 1 bis 7 wird im folgenden nicht weiter eingegangen, sondern bezüglich der Erfindung auf die oben hierzu bereits gemachten Erläuterungen verwiesen.

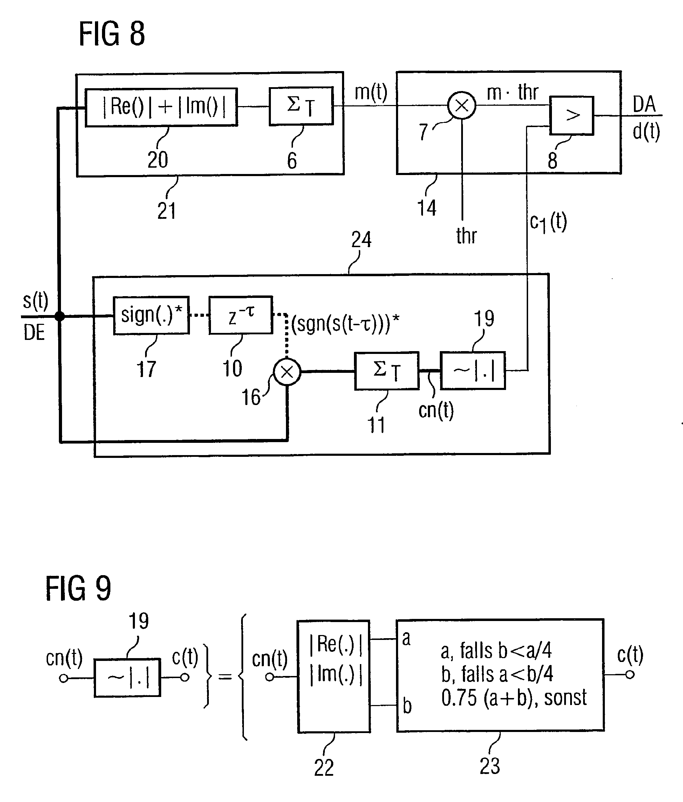

Der erfindungsgemäße Signaldetektor, wie er in Figur 8 gezeigt ist, weist einen Eingang DE auf, an den ein Eingangssignal s(t), welches das digitale komplexe Ausgangssignal des Analog-Digital-Wandler 2 sein kann, anlegbar ist. Das Eingangssignal s(t) wird einer Einheit zur Amplitudenschätzung 21 zugeführt, welche an ihrem Ausgang ein Signal mit dem Amplitudenmittelwert m(t) zur Verfügung stellt. Gleichzeitig wird das Signal s(t) einer Korrelationseinheit 24 zugeführt. Der Ausgang der Korrelationseinheit 24 ist mit einem ersten Eingang einer Entscheidungseinheit 14 verbunden. Am zweiten Eingang der Entscheidungseinheit 14 liegt ein Schwellenwert thr an. Der dritte Eingang der Entscheidungseinheit 14 ist mit dem Ausgang der Einheit zur Amplitudenschätzung 21 verbunden. Am Ausgang DA des Signaldetektors ist ein Detektorsignal d(t) abgreifbar, das angibt, ob ein periodisches Signal detektiert wurde oder nicht.

Die Korrelationseinheit 24 umfasst eine Einheit zur Bestimmung des Vorzeichens 17, welche eingangsseitig mit dem Dateneingang DE in Verbindung steht. Die Einheit zur Bestimmung des Vorzeichens 17 nimmt gleichzeitig eine komplexe Konjugation des ermittelten Vorzeichenwertes vor. Der Einheit zur Bestimmung des Vorzeichens 17 ist eine Verzögerungseinheit 10 nachgeschaltet, welche eine Verzögerung des Signals s(t) um die Periodendauer $\tau$ vornimmt. Ein Multiplizierer 16 multipliziert den von der Verzögerungseinheit 10 ausgegebenen verzögerten Vorzeichenwert mit dem Signal s(t). Hinter dem Multiplizierer 16 sind ein Summierer 11 mit der Summierzeitdauer T und eine Einheit zur Betragsbildung 19 angeordnet.

Die dicken Linien stellen komplexe Signale (2 reelle Signale), die dicken Punktlinien komplexe 2 Bit Signale (zwei reelle 1 Bit Signale) und die dünnen Linien reelle Signale dar.

Die Korrelationseinheit 24 verwendet zur Berechnung der Korrelationsfunktion c(t) die folgende Formel:

$$c(t) = \left| \sum_{t_i}^{t_i+T} s(t)\, \text{sgn}(s^*(t - \tau)) \right| \qquad (4)$$

oder die Formel:

$$c(t) = \left| \sum_{t_i}^{t_i+T} s(t)\, (\text{sgn}(s(t - \tau)))^* \right| \qquad (5)$$

Mathematisch betrachtet führen beide Formeln (4) und (5) zum gleichen Ergebnis, da es keine Rolle spielt, ob zuerst der konjugiert komplexe Teil gebildet wird und im Anschluss daran das Vorzeichen bestimmt wird oder ob zuerst das Vorzeichen bestimmt wird und dann der konjugiert komplexe Teil gebildet wird. In der Praxis hat sich jedoch gezeigt, dass die Umsetzung, das heisst die Implementierung in einen VLSI (very large scale integration)-Baustein, der zweiten Formel (5), bei welcher die komplexe Konjugation nach der Vorzeichenberechnung stattfindet, effizienter ist.

Anders als beim Stand der Technik wird bei der Erfindung das Vorzeichen des Eingangssignals s(t) bei der Berechnung der Korrelation berücksichtigt.

Das Vorzeichen des komplexen Signals s(t) setzt sich wie folgt zusammen:

$$\text{sgn}(x) = \text{sgn}(\text{Re}(x)) + j\cdot\text{sgn}(\text{Im}(x)) \qquad (6)$$

Dabei bezeichnet j die imaginäre Einheit. Die Berechnung der Korrelation c(t) anhand einer der beiden oben genannten Funktionen (4) und (5) bringt folgende Vorteile mit sich.

Das Ergebnis der Korrelation c(t) ist unabhängig von der Amplitude (daher auch von den Einstellungen des Verstärkers 1) des verzögerten Signalanteils. Das Vorzeichen hat einen festen Amplitudenmittelwert gleich eins. Daher wird das Ergebnis der Korrelation weniger stark durch Änderungen der Verstärkungseinstellung des Verstärkers 1 beeinflusst.

Ein weiterer Vorteil liegt in der deutlichen Reduktion der Anzahl der komplexen Multiplikationen, die für die Berechnung der Entscheidung notwendig sind. Mit komplexen Multiplikationen sind Multiplikationen komplexer Signale gemeint. In Figur 8 ist anhand der Linienart angedeutet, wie sich die Berechnungen vereinfachen. Für die Multiplikation ist nurmehr ein einfacher Multiplizierer 16 in Form eines gesteuerten Addierers oder Subtrahierers erforderlich.

Ein dritter Vorteil besteht darin, dass weniger Speicherelemente notwendig sind, um den verzögerten Teil des Eingangssignals s(t) zu speichern. Es sind nur 2 Bit Speicherplatz pro Signalabtastung erforderlich, um das Vorzeichen des Signals s(t) zu speichern.

Da eines der beiden Signale eine bekannte feste Amplitude aufweist, wird zur Einstellung des Schwellenwerts thr der Amplitudenmittelwert m(t) und nicht die Leistung des Signals s(t) benutzt. Der Amplitudenmittelwert m(t) kann z.B. dadurch berechnet werden, dass die Quadratwurzel aus dem mit der Gleichung (2) bestimmten Leistungsschätzwert p(t) gezogen wird.

Um jedoch die mit der Einheit zur Amplitudenschätzung 21 durchzuführende Berechnungen der Amplitude m(t) zu vereinfachen, kann in vorteilhafter Weise auch die folgende Gleichung verwendet werden:

$$m(t) = \sum_{t_i}^{t_i + T} \left( \left| \text{Re} \left( s(t) \right) \right| + \left| \text{Im} \left( s(t) \right) \right| \right) \tag{7}$$

In dieser Gleichung (7) werden sämtliche Multiplikationen vermieden, wodurch bei der digitalen Implementierung der Gleichung - mittels einer Einheit 20 zur Bildung der Beträge des Real- und des Imaginärteils und zur Addition derselben sowie des Summierers 6 - in einen VLSI-Chip Chipfläche eingespart und der Leistungsverbrauch für die Berechnung reduziert werden kann. Die Summation im Summierer 6 kann sich beispielsweise über 16 Zeitindizees erstrecken, was bei einer Abtastrate von 20 MHz einer Integrations- bzw. Summationszeitdauer T = 0,8 μs entspricht.

Auf der Basis der geschätzten Korrelation c(t), der geschätzten Amplitude m(t) und des festen Schwellenwerts thr liefert ein Entscheidungskriterium, das im folgenden näher erläutert wird, eine Aussage darüber, ob das periodische Signal vorhanden ist oder nicht.

Das Entscheidungskriterium lautet:

$$c(t) \geq m(t) * \text{thr} \tag{8}$$

Sofern die Ungleichung (8) erfüllt ist, wird angenommen, dass das periodische Signal vorliegt. Andernfalls wird angenommen, dass das periodische Signal nicht vorliegt.

Der Signaldetektor 3 kann zusätzlich dadurch vereinfacht werden, dass in der Korrelationseinheit 24 bei der Berechnung der Gleichung (4) oder (5) die Betragsbildung der Amplitude wie folgt vorgenommen wird. Normalerweise werden hierfür Multiplikationen und die Quadratwurzel benötigt. Durch eine abschnittsweise definierte Funktion zur Amplitudenschätzung kann dies vermieden werden. Die Amplitude wird daher wie folgt geschätzt:

$$c = |cn| \approx \begin{cases} \left| \text{Re}\,(cn) \right| & \text{wenn} & \left| \text{Im}\,(cn) \right| < \frac{1}{4} \left| \text{Re}\,(cn) \right| \\ \left| \text{Im}\,(cn) \right| & \text{wenn} & \left| \text{Re}\,(cn) \right| < \frac{1}{4} \left| \text{Im}\,(cn) \right| \\ \frac{3}{4} \left( \left| \text{Re}\,(cn) \right| + \left| \text{Im}\,(cn) \right| \right) & \text{sonst} \end{cases} \tag{9}$$

Die abschnittsweise definierte Funktion nach Gleichung (9) kann auch für die Lösung der Gleichung (7) verwendet werden. In diesem Fall wird die Einheit 19 zur Betragsschätzung anstelle der Einheit 20 zur Betragsbildung verwendet.

In Figur 9 ist das Blockschaltbild der entsprechenden Einheit 19 zur Betragsschätzung dargestellt. Die Einheit zur Betragsschätzung 19, wie sie in Figur 8 gezeigt ist, weist eine Einheit 22 zur Zerlegung des summierten Signals cn (t) in den Realteil und den Imaginärteil auf. Ferner umfasst sie eine Logikschaltung 23. Wenn der Imaginärteil kleiner als ein Viertel des Realteils ist, liegt am Ausgang der Logikschaltung 23 der Betrag des Realteils an. Wenn hingegen der Realteil kleiner als ein Viertel des Imaginärteils ist, liegt am Ausgang der Logikschaltung 23 der Betrag des Imaginärteils an. Falls weder die erste noch die zweite Bedingung zutreffen, liegt am Ausgang der Logikschaltung 23 der Wert dreiviertel der Summe aus dem Betrag des Realteils und dem Betrag des Imaginärteils an.

Wie den Figuren 8 und 9 entnommen werden kann, sind mit Ausnahme des reellen Multiplizierers 7 keine weiteren Multiplizierer mehr erforderlich (da der Multiplizierer 16, wie bereits erwähnt, durch gesteuerte Addierer/Subtrahierer ersetzt werden kann und für die Schätzung des Amplitudenmittelwerts m(t) sowie für die durch die Einheit 19 durchgeführte Betragsschätzung auf einen Multiplizierer völlig verzichtet werden). Aufgrund dieser Vereinfachungen sowie der Reduzierung der Speicherelemente wird gegenüber dem in Fig. 7 dargestellten Signaldetektor eine deutliche Einsparung von Chipfläche und eine deutliche Reduzierung der Leistungsaufnahme erreicht.

Die in Figur 8 gezeigte Ausführungsform der Erfindung kann selbstverständlich in der in Fig. 2 dargestellten Schaltung zum Einsatz kommen. Ferner ist sie nicht darauf beschränkt, ausschließlich das periodische Signal gemäß den beiden oben genannten Spezifikationen zu detektieren. Die Erfindung kann insbesondere auch für die Detektion von reellen Signalen verwendet werden.

**Patentansprüche**

1. Vorrichtung zur Erkennung eines Nutzsignals durch Detektion eines in dem Nutzsignal enthaltenen periodischen Signals, mit

   - einer Korrelationseinheit (24) zur Korrelation eines Signals, welches das periodische Signal enthalten kann, mit dem Vorzeichen des Signals unter Berücksichtigung einer Zeitverzögerung zwischen dem Signal und dem Vorzeichen des Signals,
   - einer Amplitudenschätzeinheit (21) zur Schätzung der Amplitude des Signals, welches das periodische Signal enthalten kann, und
   - einer Entscheidungseinheit (14), welche der Amplitudenschätzeinheit (21) und der Korrelationseinheit (24) nachgeschaltet ist, zum Entscheiden über das Vorhandensein des periodischen Signals durch Vergleich.

2. Vorrichtung nach Anspruch 1,
   **dadurch gekennzeichnet,**
   **dass** die Korrelationseinheit (24) aufweist:

   - eine Einheit (17, 10) zur Bestimmung des Vorzeichens und zur Verzögerung des Signals,
   - einen Multiplizierer (16), dessen

     -- erster Eingang der Einheit (17, 10) zur Bestimmung des Vorzeichens und zur Verzögerung des Signals nachgeschaltet ist, und
     -- dessen zweiter Eingang das Signal entgegennimmt, und

   - eine dem Multiplizierer (16) nachgeschaltete erste Summiereinheit (11).

3. Vorrichtung nach Anspruch 1 oder 2,
   **dadurch gekennzeichnet,**
   **dass** die Amplitudenschätzeinheit (21) eine Einheit (20) zur Bildung des Betrags des Realteils und des Betrags des Imaginärteils des Signals sowie eine nachgeschaltete zweite Summiereinheit (6) aufweist.

4. Vorrichtung nach einem der vorhergehenden Ansprüche,
   **dadurch gekennzeichnet,**
   **dass** die Entscheidungseinheit (14)

   - einen Multiplizierer (7) zum Multiplizieren eines von der Amplitudenschätzeinheit (21) ausgegebenen Signals mit einem vorbestimmten Wert und
   - einen Vergleicher (8) zum Vergleichen des von der Korrelationseinheit (24) ausgegebenen Signals mit dem von dem Multiplizierer (7) ausgegebenen Signal

   aufweist.

5. Vorrichtung nach einem der Ansprüche 2 bis 4,
   **gekennzeichnet durch**
   eine Einheit zur Betragsbildung (19), welche der ersten Summiereinheit (11) nachgeschaltet ist.

6. Vorrichtung nach Anspruch 3 oder 5,
   **dadurch gekennzeichnet,**
   **dass** die Einheit (20) zur Betragsbildung in der Amplitudenschätzeinheit (21) und/oder die der ersten Summiereinheit (11) nachgeschaltete Einheit (19) zur Betragsbildung zum Zwecke der Schätzung des Betrags eine zweite Entscheidungseinheit (23) aufweist oder aufweisen, welche derart ausgebildet ist, dass sie anhand einer abschnittsweise definierten Schätzfunktion den Betrag des gelieferten Signals schätzt.

7. Vorrichtung nach Anspruch 6,
   **dadurch gekennzeichnet,**

**dass** eine Einheit zur Signalzerlegung (22) in Realteil und Imaginärteil vorgesehen ist, welche der zweiten Entscheidungseinheit (23) vorgeschaltet ist.

8. Verfahren zur Erkennung eines Nutzsignals durch Detektion eines in dem Nutzsignal enthaltenen periodischen Signals,

- bei dem ein Signal, in welchem das periodische Signal vorhanden sein kann, unter Berücksichtigung einer Zeitverzögerung mit dem Vorzeichen des Signals korreliert wird,
- bei dem die Amplitude des Signals, in welchem das periodische Signal vorhanden sein kann geschätzt wird, und
- bei dem anhand der Amplitude und des bei der Korrelation erhaltenen Signals durch Vergleich entschieden wird, ob das periodische Signal vorhanden ist.

9. Verfahren nach Anspruch 8,
**dadurch gekennzeichnet,**
**dass** das Signal und dessen Vorzeichen korreliert werden, indem das Signal und das zeitverzögerte Vorzeichen des Signals miteinander multipliziert werden und ein sich daraus ergebendes Signal aufsummiert wird.

10. Verfahren nach Anspruch 9,
**dadurch gekennzeichnet,**
**dass** aus dem durch das Aufsummieren erhaltene Signal der Betrag gebildet wird.

11. Verfahren nach Anspruch 10,
**dadurch gekennzeichnet,**
**dass** der Betrag unter Verwendung einer abschnittsweise definierten Schätzfunktion geschätzt wird.

12. Verfahren nach Anspruch 10 oder 11,
**dadurch gekennzeichnet,**
**dass**, um zu entscheiden, ob das periodische Signal vorliegt, die Amplitude mit einem vorbestimmten Wert multipliziert und anschließend mit dem Betrag verglichen wird.

13. Verfahren nach einem der Ansprüche 8 bis 12,
**dadurch gekennzeichnet,**
**dass** das Nutzsignal ein Nutzsignal in einem drahtlosen lokalen Netzwerk, insbesondere gemäß dem Standard IEEE 802.11a oder dem Standard IEEE 802.11g oder dem Standard ETSI TS 101 761-1 BRAN, Hiperlan Typ2, ist.

14. Verwendung der Vorrichtung nach einem der Ansprüche 1 bis 8 in einem drahtlosen lokalen Netzwerk, insbesondere gemäß dem Standard IEEE 802.11a oder dem Standard IEEE 802.11g oder dem Standard ETSI TS 101 761-1 BRAN, Hiperlan Typ2.

**Claims**

1. Device for detecting a useful signal by detecting a periodic signal contained in the useful signal, comprising

- a correlation unit (24) for correlating a signal, which may contain the periodic signal, with the sign of the signal taking into consideration a time delay between the signal and the sign of the signal,
- an amplitude estimating unit (21) for estimating the amplitude of the signal which may contain the periodic signal, and
- a decision unit (14), which is connected downstream of the amplitude estimating unit (21) and the correlation unit (24), for deciding about the presence of the periodic signal by comparison.

2. Device according to Claim 1, **characterized in that** the correlation unit (24) exhibits the following:

- a unit (17, 10) for determining the sign and for delaying the signal,
- a multiplier (16), the

-- first input of which is connected downstream of the unit (17, 10) for determining the sign and for delaying the signal, and

-- the second input of which receives the signal, and

- a first summing unit (11) connected downstream of the multiplier (16).

3. Device according to Claim 1 or 2, **characterized in that** the amplitude estimating unit (21) exhibits a unit (20) for forming the absolute value of the real part and the absolute value of the imaginary part of the signal and a second summing unit (6) connected downstream.

4. Device according to one of the preceding claims, **characterized in that** the decision unit (14) exhibits

- a multiplier (7) for multiplying a signal output by the amplitude estimating unit (21) by a predetermined value and
- a comparator (8) for comparing the signal output by the correlation unit (24) with the signal output by the multiplier (7).

5. Device according to one of Claims 2 to 4, **characterized by** a unit for absolute-value generation (19) which is connected downstream of the first summing unit (11).

6. Device according to Claim 3 or 5, **characterized in that** the unit (20) for absolute-value generation in the amplitude estimating unit (21) and/or the unit (19) for absolute-value generation, connected downstream of the first summing unit (11), exhibits or exhibit, for the purpose of estimating the absolute value, a second decision unit (23) which is constructed in such a manner that it estimates the absolute value of the supplied signal by means of an estimating function defined section by section.

7. Device according to Claim 6, **characterized in that** a unit for splitting up the signal (22) into real part and imaginary part is provided which is connected upstream of the second decision unit (23).

8. Method for detecting a useful signal by detecting a periodic signal contained in the useful signal,

- in which a signal in which the periodic signal may be present is correlated with the sign of the signal, taking into consideration a time delay,
- in which the amplitude of the signal in which the periodic signal may be present is estimated, and
- in which a decision is made by comparison by means of the amplitude and the signal obtained during the correlation as to whether the periodic signal is present.

9. Method according to Claim 8, **characterized in that** the signal and its sign are correlated by multiplying the signal and the time-delayed sign of the signal by one another and adding together a resultant signal.

10. Method according to Claim 9, **characterized in that** the absolute value is formed from the signal obtained by the adding together.

11. Method according to Claim 10, **characterized in that** the absolute value is estimated by using an estimating function defined section by section.

12. Method according to Claim 10 or 11, **characterized in that** the amplitude is multiplied by a predetermined value and then compared with the absolute value in order to decide whether the periodic signal is present.

13. Method according to one of Claims 8 to 13, **characterized in that** the useful signal is a useful signal in a wireless local area network, particularly according to the IEEE 802.11a standard or the IEEE 802.11g standard or the ETSI TS 101 761-1 (BRAN), Hiperlan Type 2, standard.

14. Use of the device according to one of Claims 1 to 7 in a wireless local area network, particularly according to the IEEE 802.11a standard or the IEEE 802.11g standard or the ETSI TS 101 761-1 (BRAN), Hiperlan type 2, standard.

**Revendications**

1. Dispositif d'identification d'un signal utile en détectant un signal périodique contenu dans le signal utile, comprenant

- une unité ( 24 ) de corrélation pour la corrélation d'un signal, qui peut contenir le signal périodique, au signe du signal en tenant compte d'un retard dans le temps entre le signal et le signe du signal,
- une unité ( 21 ) d'évaluation d'amplitude pour l'évaluation de l'amplitude du signal qui peut contenir le signal périodique, et
- une unité ( 14 ) de décision, qui est montée en aval de l'unité ( 21 ) d'évaluation d'amplitude et de l'unité ( 24 ) de corrélation, pour décider de la présence du signal périodique par comparaison.

2. Dispositif suivant la revendication 1,
   **caractérisé**
   **en ce que** l'unité ( 24 ) de corrélation comprend :

   - une unité ( 17, 10 ) de détermination du signe et de retardement du signal,
   - un multiplicateur ( 16 ), dont

     -- la première entrée est montée en aval de l'unité ( 17, 10 ) de détermination du signe et de retardement du signal, et
     -- dont la deuxième entrée reçoit le signal, et

   - une première unité ( 11 ) de sommation en aval du multiplicateur ( 16 ).

3. Dispositif suivant la revendication 1 ou 2,
   **caractérisé**
   **en ce que** l'unité ( 21 ) d'évaluation de l'amplitude comprend une unité ( 20 ) pour la formation de la valeur absolue de la partie réelle et de la valeur absolue de la partie imaginaire du signal, ainsi qu'une deuxième unité ( 6 ) de sommation en aval.

4. Dispositif suivant l'une des revendications précédentes,
   **caractérisé**
   **en ce que** l'unité ( 14 ) de décision comporte :

   - un multiplicateur ( 7 ) pour la multiplication d'un signal émis par l'unité ( 21 ) d'évaluation de signal par une valeur déterminée à l'avance, et
   - un comparateur ( 8 ) pour la comparaison du signal émis par l'unité ( 24 ) de corrélation au signal émis par le multiplicateur ( 7 ).

5. Dispositif suivant l'une des revendications 2 à 4,
   **caractérisé par**
   une unité de formation ( 19 ) de la valeur absolue qui est montée en aval de la première unité ( 11 ) de sommation.

6. Dispositif suivant la revendication 3 ou 5,
   **caractérisé**
   **en ce que** l'unité ( 20 ) de formation d'une valeur absolue dans l'unité ( 21 ) d'évaluation d'amplitude et/ou l'unité ( 19 ), montée en aval de la première unité ( 11 ) de sommation, pour la formation d'une valeur absolue en vue d'évaluer la valeur absolue a ou ont une deuxième unité ( 23 ) de décision qui est telle qu'elle évalue, au moyen d'une fonction d'évaluation définie par parties, la valeur absolue du signal délivré.

7. Dispositif suivant la revendication 6,
   **caractérisé**
   **en ce qu'**il est prévu une unité de décomposition ( 22 ) du signal en partie réelle et en partie imaginaire, qui est montée en amont de la deuxième unité ( 23 ) de décision.

8. Procédé d'identification d'un signal utile en détectant un signal périodique contenu dans le signal utile

   - dans lequel on corrèle un signal, dans lequel le signal périodique peut être présent, en tenant compte d'un retard dans le temps, au signe du signal,
   - dans lequel on évalue l'amplitude du signal, dans lequel le signal périodique peut être présent, et
   - dans lequel, au moyen de l'amplitude et du signal obtenu dans la corrélation, on décide par comparaison si le signal périodique est présent.

**9.** Procédé suivant la revendication 8,
**caractérisé**
**en ce que** l'on corrèle le signal et son signe en multipliant l'un par l'autre le signal et le signe retardé dans le temps du signal et en faisant la somme d'un signal ainsi obtenu.

**10.** Procédé suivant la revendication 9,
**caractérisé**
**en ce que** l'on forme la valeur absolue à partir du signal obtenu par la sommation.

**11.** Procédé suivant la revendication 10,
**caractérisé**
**en ce que** l'on évalue la valeur absolue en utilisant une fonction d'évaluation définie par parties.

**12.** Procédé suivant la revendication 10 ou 11,
**caractérisé**
**en ce que**, pour décider si le signal périodique est présent, on multiplie l'amplitude par une valeur déterminée à l'avance et on compare ensuite à la valeur absolue.

**13.** Procédé suivant l'une des revendications 8 à 12,
**caractérisé**
**en ce que** le signal utile est un signal utile dans un réseau local sans fil, notamment suivant la norme IEEE 802.11a ou suivant la norme IEEE 802.11g ou suivant la norme ETSI TS 101 761-1 BRAN, Hiperlan Typ2.

**14.** Utilisation du dispositif suivant l'une des revendications 1 à 8 dans un réseau local sans fil, notamment suivant la norme IEEE 802.11a ou suivant la norme IEEE 802.11g ou suivant la norme ETSI TS 101 761-1 BRAN, Hiperlan Typ2.

## FIG 1

## FIG 2

EP 1 543 647 B1

FIG 3

8+8=16 µs

STP LTP

10 x 0.8=8 µs    2 x 0.8+2 x 3.2=8.0 µs    0.8+3.2=4.0 µs | 0.8+3.2=4.0 µs | 0.8+3.2=4.0 µs

| t1 t2 t3 t4 t5 t6 t7 t8 t9 t10 | GI2 | T1 | T2 | GI | SIGNAL | GI | Data 1 | GI | Data 2 |

FIG 4

u(t) vs [Abtastwerte]

## FIG 5

## FIG 6

FIG 7

# FIG 8

| Re() | + | Im() |  →  Σ T  →  m(t)  →  ⊗  →  m · thr  →  >  →  $\frac{DA}{d(t)}$

20    6    7    14    thr    8    $c_1(t)$

21

24

$\frac{s(t)}{DE}$  →  sign(.)*  ··· z$^{-\tau}$  (sgn(s(t-τ)))*    19

17    10    ⊗    Σ T    ~ | . |
16    11    cn(t)

# FIG 9

19

cn(t) ○— ~ | . | —○ c(t)  } = {  cn(t) —  | Re(.) |  | Im(.) |  —a  | a, falls b<a/4 \n b, falls a<b/4 \n 0.75 (a+b), sonst | —○ c(t)
—b

22    23